# EUROPEAN PATENT APPLICATION

(11) **EP 2 696 663 A2**
(43) Date of publication of application: **12.02.2014**
(21) Application number: 13179873.8
(22) Date of filing: 09.08.2013
(51) Int. Cl.: H05B 37/02, H05B 33/08

(54) **Sound activated energy-saving illumination device**

(30) Priority: 10.08.2012 TW 101215436
(71) Applicant: Kangzhun Electronical Technology (Kunshan) Co., Ltd., Kunshan Jiangsu (CN); Light Shuo Technology Co., Ltd, New Taipei (TW)
(72) Inventor: Chan, Yung-Cheng, Banqiao Dist., New Taipei (TW)
(74) Representative: Gray, John James

(57) **Abstract**

A sound-controllable illumination device (1) includes a lamp holder (10), a light source (20), a voice control module (30), a voice sensing unit (40), and a driving control unit (50). The lamp holder (10) provides a small inserting groove (11) carrying a circuit board connector (13) and the light source (20) is electrically controlled by the circuit board (12) when connected. The detachable and replaceable voice control module (30) includes a connecting port (31) for insertion into the inserting groove (11). The voice sensing unit (40) is positioned on the voice control module (30), for receiving preset sounds from a user and emits signals according to recognized sounds. The driving control unit (50) is positioned on the voice control module (30), and carries warning lights to indicate the respective statuses of all elements.

## Description

### BackGround

### Field

The present disclosure relates to an energy-saving illumination device having a voice control module, and particularly to an energy-saving illumination device which is capable of turning on or off according to a voice of a user.

### BackGround

An illumination device with a voice control function includes a light tube or a bulb, and a voice control module integrally formed with the light tube or the bulb. The light tube or bulb may include a plurality of LED members, which are durable and have a long lifespan. If the voice control module is damaged, the entire illumination device must be replaced, which results in a waste of resources, a high repair cost, and environmental pollution.

Therefore, there is room for improvement in the art.

### Summary

According to one aspect of the disclosure, a sound-controllable illumination device including a lamp holder, a light source, a voice control module, a voice sensing unit, and a driving control unit. The lamp holder provides an inserting groove carrying a circuit board connector and the light source is electrically controlled by the circuit board when connected. The detachable and replaceable voice control module includes a connecting port for insertion into the inserting groove. The voice sensing unit is positioned on the voice control module, for receiving preset sounds from a user and emits signals according to recognized sounds. The driving control unit is positioned on the voice control module, and carries warning lights to indicate the respective statuses of all elements.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout several views.

FIG. 1 is an exploded, isometric view of a first embodiment of an energy-saving illumination device having a voice control module, a light source, and a lamp holder, the lamp holder defining an inserting groove.

FIG. 2 is a partial, isometric view of the voice control module when inserted into the inserting groove of the lamp holder shown in FIG. 1.

FIG. 3 is a side view of the voice control module when inserted into the inserting groove of the lamp holder shown in FIG. 2.

FIG. 4 is a block diagram of the voice control module and the light source shown in FIG. 1.

FIG. 5 is a partial, side view of a second embodiment of an energy-saving illumination device including a voice control module and a light source.

FIG. 6 is a block diagram of the voice control module and the light source shown in FIG. 5.

### DETAILED DESCRIPTION

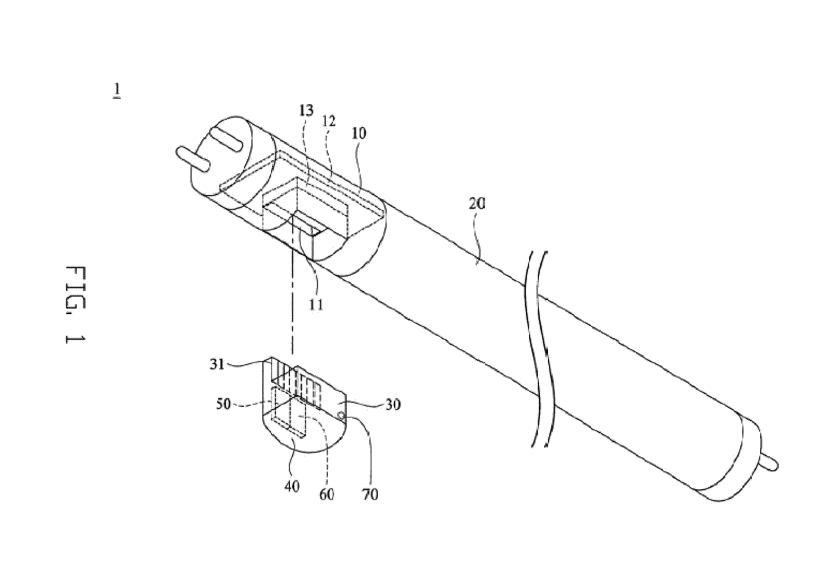

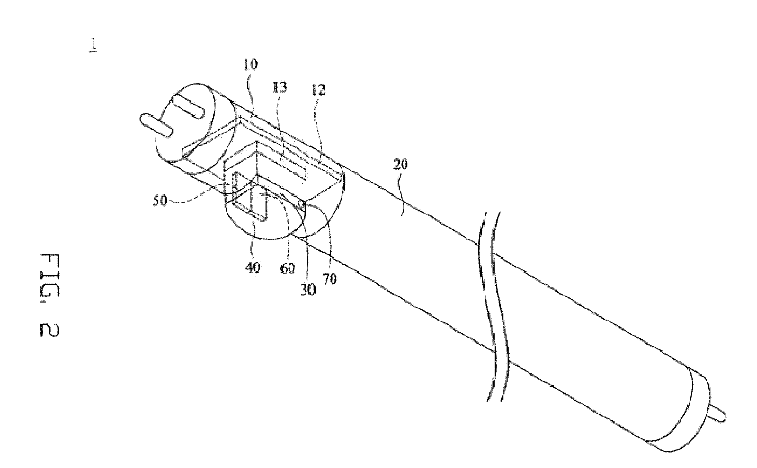

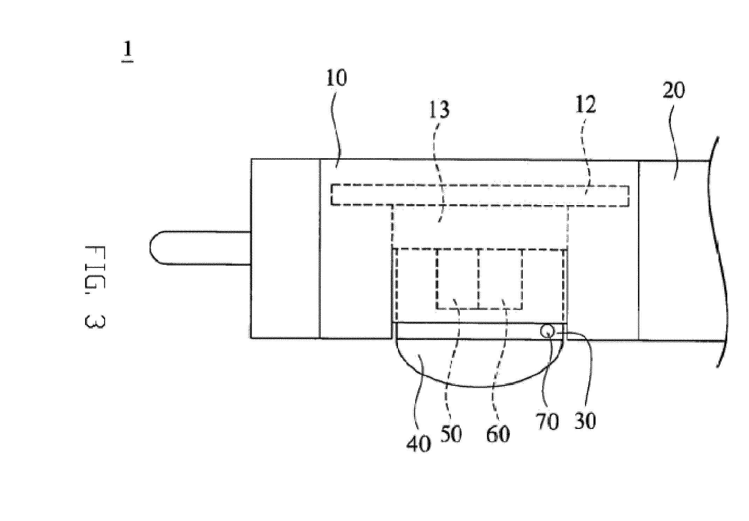

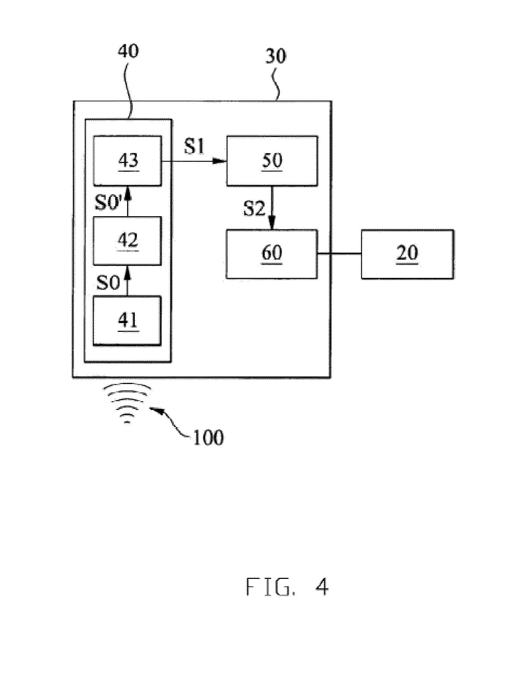

FIGS. 1 to 4 show a first embodiment of an energy-saving illumination device 1\ capable of sensing a voice command 100 of a user (not shown) and then turning on or off according to the voice command 100. The energy-saving illumination device 1 includes a lamp holder 10, a light source 20, a voice control module 30, a voice sensing unit 40, and a driving control unit 50. The lamp holder 10 defines an inserting groove 11. The inserting groove 11 is defined to accord with a connector 13 placed on a circuit board 12. The circuit board 12 is placed in the lamp holder 10. The light source 20 is assembled to the lamp holder 10, and is electrically connected to the circuit board 12. The voice control module 30 includes a connecting port 31. The voice control module 30 is inserted into the inserting groove 11, and the connecting port 31 is electrically connected to the connector 13. The voice sensing unit 40 is positioned on the voice control module 30 (shown in FIG. 4), and is configured to receive the voice command 100 and then emit a signal S1 according to the voice command 100. The driving control unit 50 is positioned in the voice control module 30, and is electrically connected to the voice sensing unit 40 and the connecting port 31. The driving control module 50 is configured to receive the signal S1 and then emit a driving signal S2, thus the light source 20 is turned on or off according to the driving signal S2. The voice command 100 may be spoken voice, a handclap or clapping, or other predetermined sounds made by a user.

FIG. 4 shows the voice sensing unit 40 of the energy-saving illumination device 1 which includes a microphone 41, a filter amplifier 42, and a microprocessor 43 connected to the filter amplifier 42. The microphone 41, the filter amplifier 42, and the microprocessor 43 are integrated in a circuit (not shown). The microphone 41 converts sound into electrical energy. The voice command 100 is transformed to an input signal S0 from the microphone 41. The microphone 41 can be a moving coil microphone, a condenser microphone, or a piezoelectric microphone. The filter amplifier 42 is connected to the microphone 41, and is configured to filter and amplify the input signal S0 (shown in FIG. 4). The input signal S0 is filtered and amplified into a filtered and amplified input signal SO'. The microprocessor 43 is connected to the filter amplifier 42, and is configured to receive the input signal SO' and emit the signal S1. The microprocessor 43 is capable of processing signals via the circuit.

In the first embodiment, the light source 20 is an LED light source, and includes an LED light tube or bulb including a plurality of LED modules arranged in array. The driving control unit 50 includes an LED control IC (integrated circuit), for generating the driving signal S2 according to the signal S1, to control the light source 20 to turn on or off.

The voice control module 30 of the energy-saving illumination device 1 can be disconnected and replaced, and detachably inserted into the inserting groove 11 of the lamp holder 10, giving the energy-saving illumination device 1 a voice control function. In addition, the voice sensing unit 40 and the driving control unit 50 received in the voice control module 30 can control power to the independent light tube or bulb.

In an illustrated embodiment, the energy-saving illumination device 1 further includes a circuit protecting unit 60 placed in the voice control module 30. The circuit protecting unit 60 is configured to break the circuit between the driving control unit 50 and the circuit board 12 when the current or voltage is abnormal, or when a temperature of the light source 20 is higher than a maximum temperature, to prevent damage to the light source 20. The circuit protecting unit 60 is a fuse in the illustrated embodiment, and thus prevents the circuit and the light source 20 from overloading.

In an embodiment, the energy-saving illumination device 1 further includes a state indicating unit 70 positioned on the voice controlling module 30, and electrically connected to the voice sensing unit 40 and the driving control module 50, to indicate a normal state or an abnormal state of the energy-saving illumination device 1. In the illustrated embodiment, the state indicating unit 70 includes an LED indicating light source. The LED indicating light source is capable of emitting light with different colors to indicate the normal state and the abnormal state of the voice sensing unit 40, the driving control unit 50, and other electrical components received in the voice control module 30 of the energy-saving illumination device 1. Thus, timely repair or replacement of the voice control module 30 is promoted.

In an alternative embodiment, the voice control module 30 of the energy-saving illumination device 1 can be plate-like or sheet-like, such as a card inserting type, so that users can conveniently insert the voice control module 30 into the inserting groove 11 of the lamp holder 10, giving the energy-saving illumination device 1 voice control function. In addition, if the light source 20 is a durable LED light source, because the voice control module 30 is detachable and inserted into the receiving groove 11, the voice control module 30 may be detached away from the lamp holder 10 and replaced with a new voice control module 30, thereby avoiding waste.

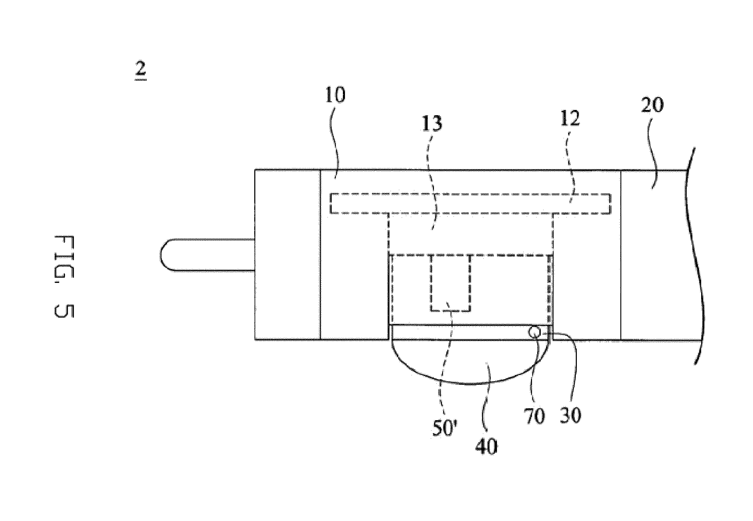

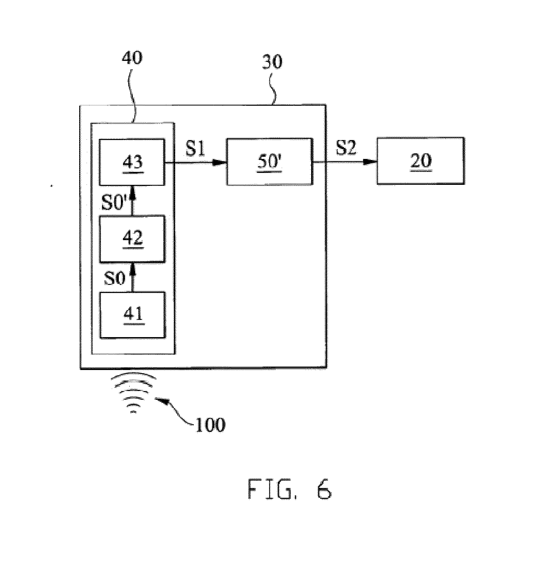

FIGS. 5 and 6 show a second embodiment of an energy-saving illumination device 2 similar to the energy-saving illumination device 1 of the first embodiment, except that the energy-saving illumination device 2 includes a driving control module 50' having an LED driving control IC and an integrated circuit (IC) protective circuit. The driving control module 50' breaks the circuit between the driving control unit 50' and the circuit board 12 when the current or voltage is abnormal, or when a temperature of the light source 20 is higher than a maximum temperature, to prevent damage to the light source 20.

The energy-saving illumination device 1 and the energy-saving illumination device 2 can prevent damage to the light source 20 from current overload and excess voltage, such as a short circuit of electrical components or the circuit, or short circuit of one or more light-emitting diodes of the light source 20. In addition, the energy-saving device illumination devices 1, 2 can prevent damage to the light source 20 from high temperature and overcome any low-efficiency operation caused by high heat sensitivity of light-emitting diodes of the light source 20. The energy-saving device illumination devices 1, 2 are durable and have a long lifespan.

The energy-saving device illumination devices 1, 2 have a detachable voice control module 30, thus the entire energy-saving device illumination devices 1, 2 would need not to be replaced. In addition, the energy-saving device illumination devices 1, 2 are capable of sensing voices of users, thus the users can control the energy-saving device illumination devices 1, 2 to turn on or off according to the voice of the user. Users do not need to turn a switch or operate a remote, thus providing convenience.

It is believed that the present embodiments and their advantages will be understood from the foregoing description, and it will be apparent that various changes may be made thereto without departing from the spirit and scope of the embodiments or sacrificing all of its material advantages.

## Claims

1. An energy-saving illumination device comprising:
a lamp holder comprising a circuit board and a connector fixed on the circuit board, the lamp holder defining an inserting groove aligned with the connector;
a light source assembled to the lamp holder, and electrically connected to the circuit board;
a voice control module inserted into the inserting groove and comprising a connecting port electrically connected to the connector;
a voice sensing unit placed on the voice control module to receive a voice command and emit a signal according to the voice command; and
a driving control unit placed on the voice control module, and electrically connected to the voice sensing unit and the connecting port to receive the signal and emit a driving signal, thereby turning on or turning off the light source according to the driving signal.

2. The energy-saving illumination device of claim 1, wherein the light source comprises an LED light source, the driving control unit comprises an LED driving control IC, and the LED driving control IC emits the driving signal according to the signal to control current to turn the light source on or off.

3. The energy-saving illumination device of claim 2, wherein the energy-saving illumination device further comprises a circuit protecting unit positioned on the voice control module to break an electrical connection between the driving control unit and the circuit board when a current or voltage is abnormal, or when a temperature of the light source is higher than a permitted maximum temperature.

4. The energy-saving illumination device of claim 3, wherein the circuit protecting unit comprises a fuse.

5. The energy-saving illumination device of claim 2, 3 or 4, wherein the driving control unit comprises an IC protective circuit to break an electrical connection between the driving control unit and the circuit board when current or voltage is abnormal, or a temperature of the light source is higher than a permitted maximum temperature.

6. The energy-saving illumination device of any preceding claim, wherein the voice sensing unit comprises a microphone, a filter amplifier connected to the microphone, and a microprocessor connected to the filter amplifier, the microphone transforms the voice command to an input signal, the filter amplifier filters and amplifies the input signal, and the microprocessor receives a filtered and amplified input signal and emits a signal.

7. The energy-saving illumination device of any preceding claim, further comprising a state indicating unit positioned on the voice control module and electrically connected to the voice sensing unit and the driving control unit, to indicate a normal state or an abnormal state of the energy-saving illumination device.

8. The energy-saving illumination device of any preceding claim, wherein a shape of the voice control module is substantially a plate or a sheet.

9. The energy-saving illumination device of claim 6 or claim 7, wherein a shape of the voice control module is substantially a plate or a sheet.

10. An energy-saving illumination device comprising:
a lamp holder defining an inserting groove;
a circuit board received in the lamp holder;
a connector received in the lamp holder and placed above the circuit board and in the lamp holder;
a light source attached to the lamp holder, and electrically connected to the circuit board;
a voice control module inserted into the inserting groove and comprising a connecting port electrically connected to the connector;
a voice sensing unit placed on the voice control module to receive a voice command and emit a signal according to the voice command;
a driving control unit placed on the voice control module and electrically connected to the voice sensing unit, the connecting port, and the circuit board,
to receive the signal and emit a driving signal, thereby turning the light source on or off according to the driving signal; and
a circuit protecting unit positioned on the voice control module to break electrical connections between the driving control unit and the circuit board when current is abnormal.

11. The energy-saving illumination device of claim 10, wherein the light source comprises an LED light source, the driving control unit comprises an LED driving control IC, and the LED driving control IC emits the driving signal according to the signal to control a current turning the light source on or off.

12. The energy-saving illumination device of claim 11, wherein the circuit protecting unit breaks electrical connections between the driving control unit and the circuit board when a current or voltage is abnormal or a temperature of the light source is higher than a permitted maximum temperature.

13. The energy-saving illumination device of claim 11 or 12, wherein the driving control unit comprises an IC protective circuit to break an electrical connection between the driving control unit and the circuit board when current or voltage is abnormal, or a temperature of the light source is higher than a permitted maximum temperature.

14. The energy-saving illumination device of claim 10, 11, 12 or 13, wherein the voice sensing unit comprises a microphone, a filter amplifier connected to the microphone, and a microprocessor connected to the filter amplifier, the microphone transforms the voice command to an input signal, the filter amplifier filters and amplifies the input signal, and the microprocessor receives a filtered and amplified input signal and emits the signal.

15. The energy-saving illumination device of any of claims 10 to 14, further comprising a state indicating unit positioned on the voice control module and electrically connected to the voice sensing unit and the driving control unit, to indicate a normal state or an abnormal state of the energy-saving illumination device.
